# EUROPEAN PATENT APPLICATION

(11) **EP 4 773 633 A1**
(43) Date of publication of application: **08.07.2026**
(21) Application number: 24870566.7
(22) Date of filing: 19.09.2024
(51) Int. Cl.: H04W 4/02

(54) **COMMUNICATION METHOD, APPARATUS AND SYSTEM**

(30) Priority: 27.09.2023 CN 202311270942
(71) Applicant: HUAWEI TECHNOLOGIES CO., LTD., Shenzhen 518129 (CN)
(72) Inventor: AI, Xi, Shenzhen, Guangdong 518129 (CN); SHEN, Shiqing, Shenzhen, Guangdong 518129 (CN); GUO, Yinghao, Shenzhen, Guangdong 518129 (CN)
(74) Representative: MERH-IP Matias Erny Reichl Hoffmann Patentanwälte PartG mbB
(86) International application number: PCT/CN2024/119775
(87) International publication number: WO 2025/067022

(57) **Abstract**

This application provides a communication method, apparatus, and system, and may be applied to the field of communication technologies, so that a plurality of positioning system information blocks can be transmitted to a terminal device through an air interface by using system information. The method includes: obtaining a plurality of positioning system information blocks, where each positioning system information block includes a plurality of segments; and periodically broadcasting the plurality of positioning system information blocks by using system information, where a periodicity of the plurality of positioning system information blocks includes a plurality of periodicities of the system information, and one segment of each of one or more positioning system information blocks in the plurality of positioning system information blocks is sent in one periodicity of the system information.

## Description

This application claims priority to Chinese Patent Application No. 202311270942.7, filed with the China National Intellectual Property Administration on September 27, 2023 and entitled "COMMUNICATION METHOD, APPARATUS, AND SYSTEM", which is incorporated herein by reference in its entirety.

### TECHNICAL FIELD

This application relates to the field of communication technologies, and in particular, to a communication method, apparatus, and system.

### BACKGROUND

To perform positioning, a base station may obtain a positioning system information block (positioning system information block, pos SIB) from a core network, and broadcast the pos SIB to a terminal device. In consideration of transmission resource limitation, one pos SIB needs to be divided into a plurality of segments for air interface transmission.

Currently, it is specified that when the base station transmits a pos SIB to the terminal device, each segment of the pos SIB needs to be scheduled in series in continuous transmission of same air interface system information. However, if the base station obtains a plurality of pos SIBs, currently, there is no solution for a specific manner in which the plurality of pos SIBs are transmitted to the terminal device.

### SUMMARY

Embodiments of this application provide a communication method, apparatus, and system, so that a plurality of pos SIBs can be transmitted to a terminal device through an air interface.

To achieve the foregoing objective, this application uses the following technical solutions.

According to a first aspect, a communication method is provided. The method may be performed by a network device, or may be performed by a module (for example, a processor, a chip, or a chip system) used in the network device. The following uses an example in which the network device performs the method for description. The method includes: The network device obtains a plurality of positioning system information blocks, where each positioning system information block includes a plurality of segments. The network device periodically broadcasts the plurality of positioning system information blocks by using system information, where a periodicity of the plurality of positioning system information blocks includes a plurality of periodicities of the system information, and one segment of each of one or more positioning system information blocks in the plurality of positioning system information blocks is sent in one periodicity of the system information.

According to the communication method provided in this embodiment of this application, the plurality of positioning system information blocks may be periodically transmitted to the terminal device in the periodicities of the system information, so that air interface transmission of the plurality of positioning system information blocks is implemented.

With reference to the first aspect, in a possible design, a quantity of the plurality of periodicities of the system information is the same as a largest segment quantity in quantities of segments included in the positioning system information blocks.

In this solution, how to periodically send the positioning system information blocks may be determined based on the largest segment quantity.

With reference to the first aspect, in a possible design, the plurality of periodicities of the system information include one or more first periodicities and one or more second periodicities, a total quantity of segments of positioning system information blocks sent in the first periodicity is the same as a quantity of the plurality of positioning system information blocks, and a total quantity of segments of positioning system information blocks sent in the second periodicity is less than the quantity of the plurality of positioning system information blocks.

Based on this solution, because the plurality of positioning system information blocks may have different segment quantities, when segments of the positioning system information blocks are sent by using the system information, a segment of each positioning system information block may be sent in some periodicities of the system information, and segments of some positioning system information blocks may be sent in some other periodicities of the system information.

With reference to the first aspect, in a possible design, a quantity of pieces of first indication information sent in the second periodicity is the same as the quantity of the plurality of positioning system information blocks, the first indication information indicates content of one segment of a corresponding positioning system information block, and in the first indication information sent in the second periodicity, one or more pieces of first indication information indicate that content of one segment of a corresponding positioning system information block is null.

This solution provides a manner in which a segment of a positioning system information block is sent by using first indication information. In this manner, if content of a segment of a positioning system information block does not need to be sent in a periodicity of the system information, corresponding first indication information is still sent, but the first indication information indicates that the content of the corresponding segment is null.

With reference to the first aspect, in a possible design, a quantity of pieces of first indication information sent in the second periodicity is the same as the total quantity of the segments of the positioning system information blocks sent in the second periodicity, and the first indication information indicates content of one segment of a corresponding positioning system information block.

This solution provides a manner in which a segment of a positioning system information block is sent by using first indication information. In this manner, if content of a segment of a positioning system information block does not need to be sent in a periodicity of the system information, the segment is not sent, and corresponding first indication information does not need to be sent.

With reference to the first aspect, in a possible design, the plurality of positioning system information blocks have different segment quantities.

According to a second aspect, a communication method is provided. The method may be performed by a terminal device, or may be performed by a module (for example, a processor, a chip, or a chip system) used in the terminal device. The following uses an example in which the terminal device performs the method for description. The method includes: periodically receiving a plurality of positioning system information blocks by using system information, where a periodicity of the plurality of positioning system information blocks includes a plurality of periodicities of the system information, and one segment of each of one or more positioning system information blocks in the plurality of positioning system information blocks is received in one periodicity of the system information.

According to the communication method provided in this embodiment of this application, the plurality of positioning system information blocks may be periodically transmitted to the terminal device in the periodicities of the system information, so that air interface transmission of the plurality of positioning system information blocks is implemented.

With reference to the second aspect, in a possible design, a quantity of the plurality of periodicities of the system information is the same as a largest segment quantity in quantities of segments included in the positioning system information blocks.

In this solution, how to periodically receive the positioning system information blocks may be determined based on the largest segment quantity.

With reference to the second aspect, in a possible design, the plurality of periodicities of the system information include one or more first periodicities and one or more second periodicities, a total quantity of segments of positioning system information blocks received in the first periodicity is the same as a quantity of the plurality of positioning system information blocks, and a total quantity of segments of positioning system information blocks received in the second periodicity is less than the quantity of the plurality of positioning system information blocks.

Based on this solution, because the plurality of positioning system information blocks may have different segment quantities, when segments of the positioning system information blocks are received by using the system information, a segment of each positioning system information block may be received in some periodicities of the system information, and segments of some positioning system information blocks may be received in some other periodicities of the system information.

With reference to the second aspect, in a possible design, a quantity of pieces of first indication information received in the second periodicity is the same as the quantity of the plurality of positioning system information blocks, the first indication information indicates content of one segment of a corresponding positioning system information block, and in the first indication information received in the second periodicity, one or more pieces of first indication information indicate that content of one segment of a corresponding positioning system information block is null.

This solution provides a manner in which a segment of a positioning system information block is sent by using first indication information. In this manner, if content of a segment of a positioning system information block does not need to be sent in a periodicity of the system information, the terminal device still receives corresponding first indication information, but the first indication information indicates that the content of the corresponding segment is null.

With reference to the second aspect, in a possible design, a quantity of pieces of first indication information received in the second periodicity is the same as the total quantity of the segments of the positioning system information blocks received in the second periodicity, and the first indication information indicates content of one segment of a corresponding positioning system information block.

This solution provides a manner in which a segment of a positioning system information block is sent by using first indication information. In this manner, if content of a segment of a positioning system information block does not need to be sent in a periodicity of the system information, the segment is not sent, and the terminal device does not receive corresponding first indication information.

With reference to the second aspect, in a possible design, the plurality of positioning system information blocks have different segment quantities.

According to a third aspect, a communication apparatus is provided, to implement various methods. The communication apparatus includes a corresponding module, unit, or means (means) for implementing the methods. The module, unit, or means may be implemented by hardware, software, or hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects and the possible implementations of the foregoing aspects. The transceiver module may include a receiving module and a sending module that are respectively configured to implement a receiving function and a sending function in any one of the foregoing aspects and the possible implementations of the foregoing aspects.

In some possible designs, the transceiver module may include a transceiver circuit, a transceiver machine, a transceiver, or a communication interface.

According to a fourth aspect, a communication apparatus is provided. The communication apparatus includes a processor and a memory. The memory is configured to store computer instructions, and when the processor executes the instructions, the communication apparatus is enabled to perform the method according to any one of the aspects.

According to a fifth aspect, a communication apparatus is provided. The communication apparatus includes a processor and a communication interface. The communication interface is configured to communicate with a module outside the communication apparatus, and the processor is configured to execute a computer program or instructions, to enable the communication apparatus to perform the method according to any one of the aspects.

According to a sixth aspect, a communication apparatus is provided. The communication apparatus includes at least one processor. The processor is configured to execute a computer program or instructions stored in a memory, to enable the communication apparatus to perform the method according to any one of the aspects. The memory may be coupled to the processor, or may be independent of the processor.

According to a seventh aspect, a computer-readable storage medium is provided. The computer-readable storage medium stores a computer program or instructions. When the computer program or the instructions are run on a communication apparatus, the communication apparatus is enabled to perform the method according to any one of the aspects.

According to an eighth aspect, a computer program product including instructions is provided. When the instructions are run on a communication apparatus, the communication apparatus is enabled to perform the method according to any one of the aspects.

According to a ninth aspect, a communication apparatus (where for example, the communication apparatus may be a chip or a chip system) is provided. The communication apparatus includes a processor, configured to implement the functions in any one of the aspects.

In some possible designs, the communication apparatus includes the memory, and the memory is configured to store necessary program instructions and data.

In some possible designs, when the apparatus is a chip system, the apparatus may include a chip, or may include a chip and another discrete component.

The communication apparatus according to any one of the third aspect to the ninth aspect may be the network device in the first aspect, or an apparatus included in the network device, for example, a chip or a chip system; or the communication apparatus may be the terminal device in the second aspect, or an apparatus included in the terminal device, for example, a chip or a chip system.

It may be understood that when the communication apparatus according to any one of the third aspect to the ninth aspect is a chip, a sending action/function of the communication apparatus may be understood as outputting information, and a receiving action/function of the communication apparatus may be understood as inputting information.

According to a tenth aspect, a communication system is provided. The communication system includes a network device and a terminal device. The network device is configured to implement any design manner of the first aspect, and the terminal device is configured to implement any design manner of the second aspect.

For technical effects brought by any design manner of the third aspect to the tenth aspect, refer to the technical effects brought by different design manners of the first aspect and the second aspect. Details are not described herein again.

### BRIEF DESCRIPTION OF DRAWINGS

FIG. 1 is a diagram of transmission of assistance information;
FIG. 2 is a diagram of a structure of a communication system according to an embodiment of this application;
FIG. 3 is a diagram of a structure of a communication apparatus according to an embodiment of this application;
FIG. 4 is a diagram of interaction of a communication method according to an embodiment of this application; and
FIG. 5 is a diagram of a structure of another communication apparatus according to an embodiment of this application.

### DESCRIPTION OF EMBODIMENTS

For ease of understanding of technical solutions in embodiments of this application, the following first briefly describes technologies related to this application.

### 1. Assisted global navigation satellite system (assisted global navigation satellite system, A-GNSS):

The global navigation satellite system (global navigation satellite system, GNSS) has evolved from an initial global positioning system (global positioning system, GPS) to the current coexistence of a plurality of systems such as the GPS, BeiDou, a global navigation satellite system (global navigation satellite system, GLONASS), and Galileo. When the GNSS is used for user location positioning, positioning accuracy is affected by internal and external factors of the system, such as an error arising from penetration through the ionosphere and troposphere, an error caused by the Doppler effect due to high-speed movement of the satellite, a multipath effect error, a channel error, a satellite clock error, an ephemeris error, and an internal noise error. To better eliminate the errors and improve positioning accuracy, some auxiliary means are introduced into the GNSS. The GNSS combined with the auxiliary means is also referred to as the A-GNSS.

When the A-GNSS is used for positioning, a user needs to obtain related assistance positioning data (which may be referred to as assistance information for short in this specification) from a network side, for example, real-time kinematic (real-time kinematic, RTK) information. In an RTK-assisted GNSS positioning method, a plurality of reference stations (referring to fixed ground observation stations that continuously observe a satellite navigation signal for a long time) collect satellite monitoring data and send the satellite monitoring data to a control center of a third-party operator. The control center performs gross error elimination on the data, performs resolution, and finally sends generated RTK correction information to the user.

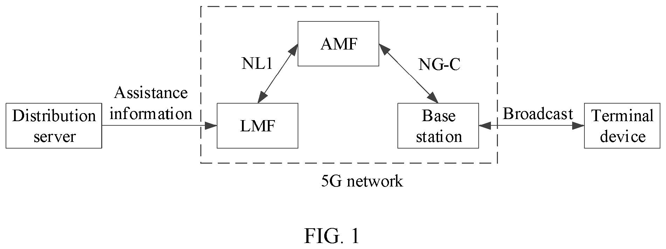

Currently, the 3rd generation partnership project (3rd generation partnership project, 3GPP) protocol supports transmission of GNSS positioning assistance information by broadcasting a pos SIB through a base station. FIG. 1 is a diagram in which GNSS positioning assistance information is transmitted from a distribution server to a terminal device in a 5th generation (5th generation, 5G) mobile communication system. As shown in FIG. 1, the distribution server sends the assistance information to a location management function (location management function, LMF) network element. The LMF network element sends the assistance information to an access and mobility management function (access and mobility management function, AMF) network element through an NL1 interface. The AMF network element sends the assistance information to the base station through an NG-C interface, and the base station broadcasts the assistance information to the terminal device by using the pos SIB. In other words, in a manner of broadcasting through a widely deployed base station, the terminal device may obtain the GNSS positioning assistance information without interacting with the distribution server, thereby effectively reducing pressure of the distribution server.

The pos SIB is a specific type of system information (system information, SI).

### 2. Pos SIB transmission:

According to a definition in the current 3GPP protocol 38.455, if the base station receives a pos SIB from the LMF network element, related information of the pos SIB may be shown in Table 1 below.

**Table 1**

| Information element (information element, IE)/IE group name (IE/Group Name) | Presence (presence) | Range (range) | IE type and reference (IE type and reference) | Semantics description (Semantics description) |
|---|---|---|---|---|
| Pos SIBs | | 1 <maxNr of pos SIBs> | | Quantity of pos SIBs in system information (Number of pos SIBs in the System Information) |
| Pos SIB type (pos SIB-type) | M | | 9.2.22 | |
| Pos SIB segments (pos SIB segments) | M | | 9.2.20 | |
| Assistance information metadata (assistance information metadata) | O | | 9.2.21 | |
| Broadcast priority (broadcast priority) | O | | INTEGER(1, 16, ...) | Priority of assistance information, where 1 indicates the highest priority, and 16 indicates the lowest priority |

In Table 1, the pos SIB type indicates a type of the pos SIB. A type or range of assistance information that can be transmitted by each type of pos SIB may be defined in the protocol. However, specific content (namely, a bitstream) of the assistance information is generated by a corresponding device, and is not limited in the protocol. For example, the specific content of the assistance information may be generated by the distribution server and transmitted to the LMF network element.

Because a complete pos SIB has relatively large content, a transmission resource is limited when the base station sends the pos SIB to the terminal device, and one pos SIB needs to be divided into a plurality of segments for transmission. In Table 1, the pos SIB segment indicates a manner in which the pos SIB is segmented. For example, assuming that specific content of the pos SIB is 0 to 100, the pos SIB segment may indicate that the pos SIB is divided into segments 0 to 50, 51 to 70, and 71 to 30.

The assistance information metadata includes metadata of an assistance information element.

The broadcast priority indicates a priority of broadcasting the pos SIB by the base station. For example, assuming that a broadcast priority of a pos SIB 1 is 10 and a broadcast priority of a pos SIB 2 is 8, the base station needs to preferentially broadcast the pos SIB 2.

The presence (presence) indicates whether a corresponding information element is optional or mandatory. M indicates mandatory and O indicates optional.

The range (range) indicates whether the corresponding information element is of a list type or another type or a value range.

The IE type and reference (IE type and reference) indicates a type of the corresponding information element and a protocol section for details.

The semantics description represents a meaning of the corresponding information element. For example, a quantity of pos SIBs in system information is a quantity of pos SIBs included in the system information delivered by the LMF, and may be one or more.

The LMF network element may send one or more pos SIBs to the base station. For related information of each pos SIB, refer to information shown in Table 1. After receiving the pos SIBs from the LMF network element, the base station broadcasts each pos SIB to the terminal device.

According to a definition in the current 3GPP protocol 38.331, the pos SIB broadcast by the base station to the terminal device may include a type and detailed information (including specific content of the to-be-broadcast pos SIB) of the pos SIB.

For example, the information of the pos SIB broadcast by the base station to the terminal device may be represented in the following manner:

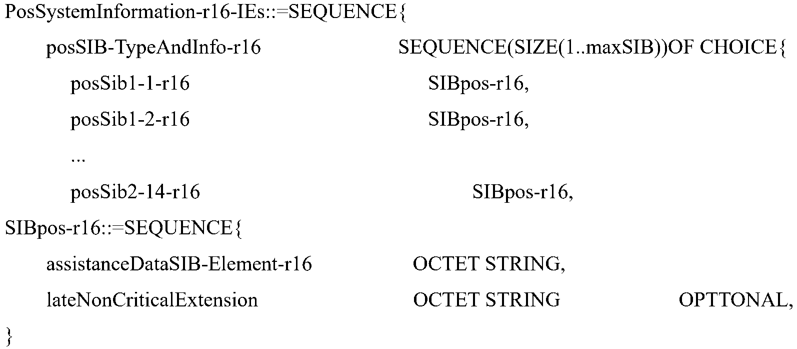

PosSystemInformation-r16-IEs indicates that the following carried fields are the information of the pos SIB. The posSIB-TypeAndInfo-r16 field may indicate a type of the pos SIB. For example, if posSIB-TypeAndInfo-r16 carries posSib1-1-r16, it indicates that the type of the pos SIB is 1-1. If the pos SIB is not segmented, the assistanceDataSIB-Element-r16 field indicates specific content (namely, a bitstream) of the pos SIB. If the pos SIB is segmented, the assistanceDataSIB-Element-r16 field indicates specific content of one segment of the pos SIB.

According to the definition in the current 3GPP protocol 38.331, if the pos SIB is divided into a plurality of segments, when the pos SIB is transmitted to the terminal device (that is, when the pos SIB is transmitted through an air interface), each segment of the pos SIB needs to be scheduled in series in continuous transmission of same air interface system information, that is, one segment of the pos SIB may be transmitted in each air interface periodicity of same system information.

However, if the base station obtains a plurality of pos SIBs, in the current standard, there is no specific solution for a specific manner in which the plurality of pos SIBs are transmitted to the terminal device. Based on this, this application proposes a communication method, apparatus, and system, to provide a specific implementation of transmitting a plurality of pos SIBs to a terminal device through an air interface.

In the descriptions of this application, unless otherwise specified, "/" indicates that associated objects are in an "or" relationship. For example, A/B may represent A or B. In this application, "and/or" describes only an association relationship between associated objects and indicates that three relationships may exist. For example, A and/or B may indicate the following cases: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof refers to any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, the term such as "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the term such as "example" or "for example" is intended to present a related concept in a specific manner for ease of understanding.

In embodiments of this application, "indication" may include a direct indication and an indirect indication, or may include an explicit indication and an implicit indication. Information indicated by a piece of information (for example, the following first indication information) is referred to as to-be-indicated information. In a specific implementation process, the to-be-indicated information is indicated in a plurality of manners. By way of example and not limitation, the to-be-indicated information may be directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of all pieces of information that is pre-agreed on (for example, specified in a protocol), to reduce indication overheads to some extent. In addition, a common part of all pieces of information may be identified and indicated in a unified manner, to reduce indication overheads caused by separately indicating same information.

Furthermore, specific indication manners may alternatively be various existing indication manners, for example, but not limited to, the foregoing indication manners and various combinations thereof. For details of the various indication manners, refer to the conventional technology. Details are not described in this specification again. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

It should be understood that the to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in embodiments of this application. The sending periodicities and/or the sending occasions of these pieces of sub-information may be predefined, for example, predefined according to a protocol, or may be configured by a transmitting end device by sending configuration information to a receiving end device.

In embodiments of this application, "predefined, "predefinition, "preconfigured", or "preconfiguration" may be implemented by pre-storing corresponding code or a corresponding table in a device, or may be implemented in another manner for indicating related information, for example, may be burnt into the device before delivery. A specific implementation is not limited in embodiments of this application. "Storage" may be storage in one or more memories. The one or more memories may be separately disposed, or may be integrated into an encoder or a decoder, a processor, or a communication apparatus. Alternatively, some of the one or more memories may be separately disposed, and some of the one or more memories are integrated into a decoder, a processor, or a communication apparatus. A type of the memory may be a storage medium in any form. This is not limited in embodiments in this application.

The "protocol" in embodiments of this application may be a protocol family in the communication field, a standard protocol with a frame structure similar to the protocol family, or a related protocol applied to a future communication system. This is not specifically limited in embodiments of this application.

In embodiments of this application, descriptions such as "when...", "in a case of...", and "if" all mean that a device performs corresponding processing in an objective case, and do not limit time, and the device is not required to perform a determining action during implementation. This does not mean that there is another limitation.

The technical solutions provided in this application may be applied to various communication systems that support the A-GNSS. The communication systems may be a 3GPP communication system, for example, a 4th generation (4th generation, 4G) long term evolution (long term evolution, LTE) system, a 5G mobile communication system and an evolved system thereof, a vehicle to everything (vehicle to everything, V2X) system, an LTE and new radio (new radio, NR) hybrid networking system, a device-to-device (device-to-device, D2D) system, a machine to machine (machine to machine, M2M) communication system, internet of things (internet of things, IoT), and another next-generation communication system, for example, a 6th generation (6th generation, 6G) mobile communication system.

It should be noted that the network architecture and the service scenario described in embodiments of this application are intended to describe the technical solutions in embodiments of this application more clearly, and do not constitute a limitation on the technical solutions provided in embodiments of this application. A person of ordinary skill in the art may learn that: With the evolution of the network architecture and the emergence of new service scenarios, the technical solutions provided in embodiments of this application are also applicable to similar technical problems.

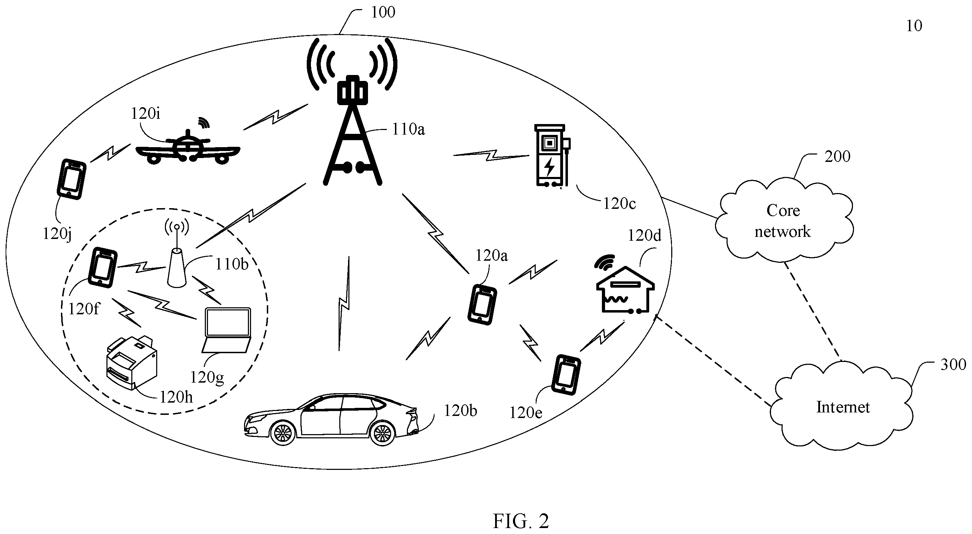

FIG. 2 is a diagram of a possible and non-limiting communication system to which an embodiment of this application is applicable. As shown in FIG. 2, the communication system 10 includes a radio access network (radio access network, RAN) 100 and a core network (core network, CN) 200. The RAN 100 includes at least one RAN node (for example, 110a and 110b in FIG. 2, collectively referred to as 110) and at least one terminal device (for example, 120a to 120j in FIG. 2, collectively referred to as 120). The RAN 100 may further include another RAN node, for example, a wireless relay device and/or a wireless backhaul device (not shown in FIG. 2). The terminal device 120 is connected to the RAN node 110 in a wireless manner. The RAN node 110 is connected to the core network 200 in a wireless or wired manner. A core network device in the core network 200 and the RAN node 110 in the RAN 100 may respectively be different physical devices, or may be a same physical device that integrates a logical function of the core network and a logical function of the radio access network.

As shown in FIG. 2, optionally, the communication system 10 may further include internet 300. The internet may be connected to the core network or the RAN.

The RAN 100 may be a 3GPP-related cellular system, for example, a 4G or 5G mobile communication system, or a future-oriented evolved system (for example, a 6G mobile communication system). The RAN 100 may alternatively be an open access network (open RAN, O-RAN or ORAN), a cloud radio access network (cloud radio access network, CRAN), or a wireless fidelity (wireless fidelity, Wi-Fi) system. The RAN 100 may alternatively be a communication system that integrates two or more of the foregoing systems.

The RAN node 110 may also be sometimes referred to as an access network device, a RAN entity, an access node, or the like, and forms a part of the communication system, to help the terminal device implement radio access. A plurality of RAN nodes 110 in the communication system 10 may be nodes of a same type, or may be nodes of different types. In some scenarios, roles of the RAN node 110 and the terminal device 120 are relative. For example, a network element 120i in FIG. 2 may be a helicopter or an uncrewed aerial vehicle, and may be configured as a mobile base station. For a terminal device 120j that accesses the RAN 100 through the network element 120i, the network element 120i is a base station. However, for a base station 110a, the network element 120i is a terminal device. The RAN node 110 and the terminal device 120 are sometimes referred to as communication apparatuses. For example, network elements 110a and 110b in FIG. 2 may be understood as communication apparatuses having a base station function, and the network elements 120a to 120j may be understood as communication apparatuses having a terminal device function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, an access node in a Wi-Fi system, or the like. The RAN node may be a macro base station (for example, 110a in FIG. 2), a micro base station or an indoor station (for example, 110b in FIG. 2), a relay node or a donor node, or a radio controller in a CRAN scenario. Optionally, the RAN node may alternatively be a server, a wearable device, a vehicle, a vehicle-mounted device, or the like. For example, an access network device in a V2X technology may be a roadside unit (roadside unit, RSU). All or a part of functions of the RAN node in this application may alternatively be implemented by using a software function running on hardware, or may be implemented by using an instantiated virtualization function on a platform (for example, a cloud platform). Alternatively, the RAN node in this application may be a logical node, a logical module, or software that can implement all or a part of functions of the RAN node.

In another possible scenario, a plurality of RAN nodes coordinate to assist the terminal device in implementing wireless access, and different RAN nodes separately implement a part of functions of a base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The RAN node may also be expressed differently, such as a network device. In this application, unless otherwise specified, a network device is used for description below.

The terminal device may be a device having a wireless transceiver function, and may also be referred to as a terminal (terminal), user equipment (user equipment, UE), a mobile station, a mobile terminal device, or the like. The terminal device may be widely applied to various scenarios, such as D2D, V2X communication, machine-type communication (machine-type communication, MTC), IoT, virtual reality (virtual reality, VR), augmented reality (augmented reality, AR), industrial control (industrial control), self-driving (self-driving), telemedicine (remote medical), smart grid (smart grid), smart furniture, smart office, smart wearable, smart transportation, and smart city. The terminal device may be a mobile phone, a tablet computer, a computer having a wireless transceiver function, a wearable device, a vehicle, an uncrewed aerial vehicle, a helicopter, an airplane, a ship, a robot, a robotic arm, a smart home device, or the like. A device form of the terminal device is not limited in embodiments of this application.

In a communication method provided in embodiments of this application, an example in which a network device and any terminal device interact with each other is used. The network device obtains a plurality of positioning system information blocks (pos SIBs), where each positioning system information block includes a plurality of segments. The network device periodically broadcasts the plurality of positioning system information blocks by using system information, where a periodicity of the plurality of positioning system information blocks includes a plurality of periodicities of the system information, and one segment of each of one or more positioning system information blocks in the plurality of positioning system information blocks is sent in one periodicity of the system information. Correspondingly, the terminal device periodically receives the plurality of positioning system information blocks by using the system information. Specific implementations and technical effects of this solution are described in detail in subsequent method embodiments. Details are not described herein again.

Optionally, the communication system 10 may further include a distribution server and/or a control center (not shown in FIG. 2). The distribution server and/or the control center may generate positioning assistance information, and the distribution server may send the positioning assistance information to the network device by using the core network, so that the network device sends the assistance information to the terminal device by using the positioning system information blocks.

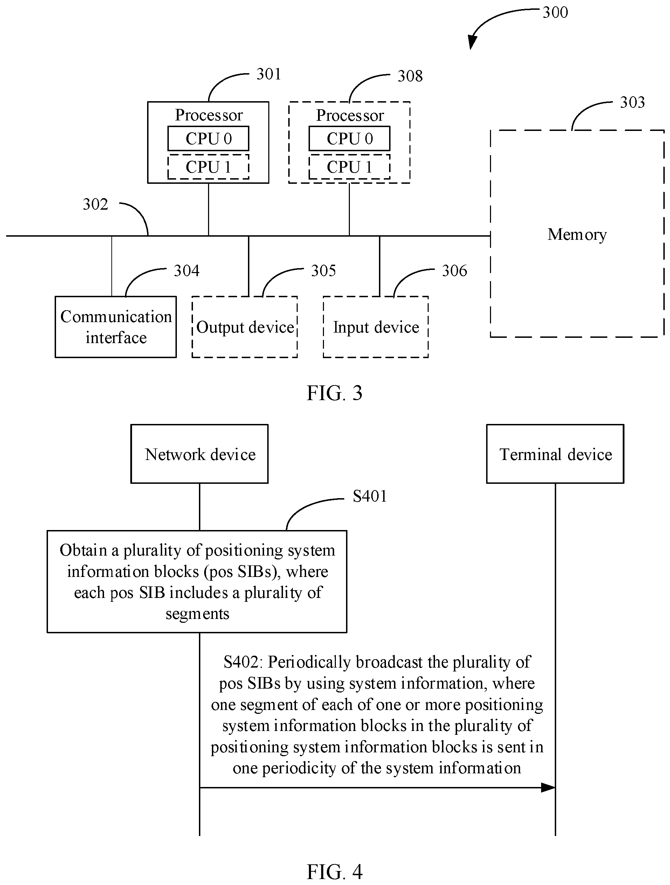

Optionally, the network device or the terminal device may use a structure of a communication apparatus 300 shown in FIG. 3. As shown in FIG. 3, the communication apparatus 300 includes a processor 301, a communication line 302, and at least one communication interface (where FIG. 3 is described merely by using an example in which the communication apparatus 300 includes a communication interface 304). Optionally, the communication apparatus 300 may further include a memory 303.

The processor 301 may be a general-purpose central processing unit (central processing unit, CPU), a microprocessor, an application-specific integrated circuit (application-specific integrated circuit, ASIC), or one or more integrated circuits configured to control program execution of the solutions in this application.

The communication line 302 may include a path for transmitting information between the foregoing components.

The communication interface 304 is configured to communicate with another device or a communication network through any transceiver-type apparatus, for example, the ethernet, a radio access network, or a wireless local area network (wireless local area network, WLAN).

The memory 303 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compact disc, a laser disc, an optical disc, a digital versatile disc, a Blu-ray disc, and the like), a magnetic disk storage medium or another magnetic storage device, or any other medium that can be used to carry or store expected program code in an instruction form or a data structure form and that can be accessed by a computer, but is not limited thereto. The memory may exist independently, and is connected to the processor through the communication line 302. The memory may alternatively be integrated with the processor.

The memory 303 is configured to store computer-executable instructions for performing the solutions in this application, and the processor 301 controls execution. The processor 301 is configured to execute the computer-executable instructions stored in the memory 303, to implement a method provided in the following embodiments of this application.

Optionally, the computer-executable instructions in embodiments of this application may also be referred to as application program code or computer program code. This is not specifically limited in embodiments of this application.

During specific implementation, in an embodiment, the processor 301 may include one or more CPUs, such as a CPU 0 and a CPU 1 in FIG. 3.

During specific implementation, in an embodiment, the communication apparatus 300 may include a plurality of processors, such as the processor 301 and a processor 308 in FIG. 3. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the communication apparatus 300 may further include an output device 305 and an input device 306. The output device 305 communicates with the processor 301, and may display information in a plurality of manners. For example, the output device 305 may be a liquid crystal display (liquid crystal display, LCD), a light-emitting diode (light-emitting diode, LED) display device, a cathode ray tube (cathode ray tube, CRT) display device, or a projector (projector). The input device 306 communicates with the processor 301, and may receive an input of a user in a plurality of manners. For example, the input device 306 may be a mouse, a keyboard, a touchscreen device, or a sensor device.

It may be understood that the structure shown in FIG. 3 does not constitute a specific limitation on the communication apparatus 300. For example, in some other embodiments of this application, the communication apparatus 300 may include more or fewer components than those shown in the figure, or may combine some components, or may split some components, or may have different component arrangements. The components shown in the figure may be implemented by hardware, software, or a combination of software and hardware.

With reference to FIG. 2 to FIG. 3, the following describes, by using the example in which the network device and any terminal device interact with each other, the communication method provided in embodiments of this application.

It should be noted that names of messages between network elements, names of parameters in the messages, or the like in the following embodiments of this application are merely examples, and there may be other names during specific implementation. This is not specifically limited in embodiments of this application.

FIG. 4 shows a communication method according to an embodiment of this application. In FIG. 4, the method is described by using an example in which a network device and a terminal device are entities for performing the illustrative interaction. However, the entities for performing the illustrative interaction are not limited in this application. For example, the network device in FIG. 4 may alternatively be a module, for example, a chip, a chip system, or a processor, used in the network device, or may be a logical node, a logical module, or software that can implement all or a part of functions of the network device node. The terminal device in FIG. 4 may alternatively be a module, for example, a chip, a chip system, or a processor, used in the terminal device, or may be a logical node, a logical module, or software that can implement all or a part of functions of the terminal device. The communication method includes the following steps.

S401: The network device obtains a plurality of positioning system information blocks (pos SIBs), where each pos SIB includes a plurality of segments.

In this embodiment of this application, the plurality of pos SIBs obtained by the network device are of different types. In other words, the plurality of pos SIBs are classified based on types. For example, the network device obtains four types of pos SIBs, and a quantity of each type of pos SIBs is 1. That is, the network device obtains four pos SIBs.

Segment quantities of the plurality of pos SIBs may be the same, or may be different, or may be partially the same and partially different.

A type and a segment quantity of a pos SIB obtained by the network device may be defined (or configured) by information included in the obtained pos SIB. For example, for specific information included in the pos SIB obtained by the network device, refer to the foregoing descriptions of Table 1.

The pos SIBs obtained by the network device in S401 may be sent by a core network device to the network device. For example, an LMF network element sends the plurality of pos SIBs to the network device. In a possible implementation, an intermediate network element, for example, an AMF network element, may forward, to the network device, the plurality of pos SIBs from the LMF network element. For example, the AMF network element may transparently transmit the plurality of pos SIBs to the network device by forwarding an NR positioning protocol A (NR positioning protocol A, NRPPa) message.

In this embodiment of this application, the pos SIBs may include positioning assistance information. For example, the positioning assistance information may include information such as RTK information, GNSS reference location (GNSS-ReferenceLocation) information, GNSS reference time (GNSS-ReferenceTime) information, and GNSS differential correction (GNSS-DifferentialCorrections) information. In this case, the plurality of pos SIBs may be configured by the core network device to carry the positioning assistance information.

Optionally, the positioning assistance information obtained by the core network device may be from a distribution server and/or a control center. In other words, the distribution server and/or the control center send/sends the positioning assistance information to the core network device. After receiving the positioning assistance information, the core network device configures the plurality of pos SIBs to carry the positioning assistance information, and sends the plurality of pos SIBs to the network device. The distribution server and/or the control center may be deployed by a third-party operator.

For example, the distribution server sends the positioning assistance information to the LMF network element. After receiving the positioning assistance information, the LMF network element configures the plurality of pos SIBs to carry the positioning assistance information. The LMF network element sends the plurality of configured pos SIBs to the network device through the AMF network element.

Optionally, after obtaining the positioning assistance information, the core network device, for example, the LMF network element, may encrypt the positioning assistance information based on keys, and then send, to the network device, the pos SIBs including the encrypted assistance information.

Optionally, if the intermediate network element, for example, the AMF network element, forwards the pos SIBs to the network device, after receiving the pos SIBs, the intermediate network element may store, update, or delete the keys used for encrypting the assistance information.

S402: The network device periodically broadcasts the plurality of pos SIBs by using system information, where a periodicity of the plurality of pos SIBs includes a plurality of periodicities of the system information, and one segment of each of one or more pos SIBs in the plurality of pos SIBs is sent in one periodicity of the system information. Correspondingly, the terminal device periodically receives the plurality of pos SIBs by using the system information.

In S402, after obtaining the plurality of pos SIBs, the network device determines, based on a segment quantity of each pos SIB, how to periodically broadcast the plurality of pos SIBs. The following provides detailed descriptions.

The network device determines, based on the segment quantity of each pos SIB, a largest segment quantity, namely, a segment quantity of a pos SIB with a largest quantity of segments. Further, the network device determines, based on the largest segment quantity, a quantity of periodicities that are of the system information and that are included in the periodicity for broadcasting the plurality of pos SIBs (where for ease of description, the periodicity is referred to as a pos SIB periodicity below, or certainly, another name may be used, which is not limited in embodiments of this application). The periodicity of the system information is a periodicity for broadcasting the system information. For ease of description, the periodicity of the system information is referred to as an SI periodicity below, or certainly, another name may be used, which is not limited in embodiments of this application.

For example, the quantity of SI periodicities included in the pos SIB periodicity may be the same as the largest segment quantity. In other words, the pos SIB periodicity includes a plurality of SI periodicities, and a quantity of the plurality of SI periodicities is the same as the largest segment quantity.

Further, the network device allocates a to-be-sent segment of a pos SIB for each SI periodicity included in the pos SIB periodicity. After allocation, one segment of each of the one or more pos SIBs may be sent in one SI periodicity, so that a segment of each of the plurality of pos SIBs may be sent in an SI periodicity included in the pos SIB periodicity. In this way, the plurality of pos SIBs are periodically broadcast in the pos SIB periodicity.

Sending a segment of a pos SIB refers to sending specific content (namely, a bitstream) of the segment of the pos SIB.

Optionally, the plurality of SI periodicities included in the pos SIB periodicity may include one or more first periodicities and one or more second periodicities. A total quantity of segments of pos SIBs sent in the first periodicity is the same as a quantity of the plurality of positioning system information blocks. A total quantity of segments of pos SIBs sent in the second periodicity is less than the quantity of the plurality of positioning system information blocks.

It may be understood that the first periodicity is an example name of an SI periodicity in which a total quantity of sent segments of pos SIBs is the same as the quantity of the plurality of pos SIBs, or another name may be used, which is not limited in embodiments of this application. Similarly, the second periodicity is an example name of an SI periodicity in which a total quantity of sent segments of pos SIBs is less than the quantity of the plurality of pos SIBs, or another name may be used, which is not limited in embodiments of this application.

For example, it is assumed that the network device obtains three pos SIBs, and types of the three pos SIBs are respectively 2-12, 2-13, and 2-14 (where the three pos SIBs are respectively referred to as 2-12, 2-13, and 2-14 for short below), where a segment quantity of 2-12 is 3, a segment quantity of 2-12 is 2, and a segment quantity of 2-13 is 4. In this case, the largest segment quantity is 4. Therefore, the pos SIB periodicity includes four SI periodicities. In the four SI periodicities included in the pos SIB periodicity, a segment of 2-12 (which may be referred to as a segment 1 of 2-12), a segment of 2-13 (which may be referred to as a segment 1 of 2-13), and a segment of 2-14 (which may be referred to as a segment 1 of 2-14) are sent in a 1^{st} SI periodicity; another segment of 2-12 (which may be referred to as a segment 2 of 2-12), another segment of 2-13 (which may be referred to as a segment 2 of 2-13), and another segment of 2-14 (which may be referred to as a segment 2 of 2-14) are sent in a 2^{nd} SI periodicity; another segment of 2-12 (which may be referred to as a segment 3 of 2-12) and another segment of 2-14 (which may be referred to as a segment 3 of 2-14) are sent in a 3^{rd} SI periodicity; and another segment of 2-14 (which may be referred to as a segment 4 of 2-14) is sent in a 4^{th} SI periodicity. Based on quantities of the segments of the pos SIBs sent in the four SI periodicities, the 1^{st} SI periodicity and the 2^{nd} SI periodicity may be referred to as first SI periodicities, where total quantities of the sent segments of the pos SIBs each are 3, which are the same as the quantity of the pos SIBs; and the 3^{rd} SI periodicity and the 4^{th} SI periodicity may be referred to as second SI periodicities, where total quantities of the sent segments of the pos SIBs are 2 and 1 respectively, which are less than the quantity of pos SIBs.

Optionally, the network device may cyclically broadcast the plurality of pos SIBs in the pos SIB periodicity.

The foregoing describes periodically broadcasting the plurality of pos SIBs in the pos SIB periodicity. For a specific manner in which a segment of a pos SIB is sent to the terminal device, in a possible implementation, the network device may indicate content of one segment (where the content of the segment may also be referred to as specific content, namely, a bitstream, of the segment, and details are not described in the following embodiment) of a pos SIB by using first indication information. First indication information and the pos SIBs may be in a one-to-one correspondence. In other words, one piece of first indication information indicates content of one segment of a corresponding pos SIB.

Optionally, the first indication information may indicate a length of a bitstream of one segment of a corresponding pos SIB. For example, the first indication information may indicate that the length of the bitstream of the segment of the corresponding pos SIB is 50.

Optionally, the first indication information may correspond to information indicating a type of a pos SIB, to indicate content of one segment of the pos SIB.

For example, the first indication information may be an assistance DataSIB-Element-r16 field. The assistance DataSIB-Element-r16 field may be included in a posSIB-Type field, to indicate content of one segment of a pos SIB corresponding to the posSIB-Type field. The posSIB-Type field may be carried in a posSystemInformationr16-IEs field. For details, refer to the foregoing descriptions. Details are not described herein again.

This embodiment of this application provides two possible implementations for a specific implementation in which a segment of a pos SIB is sent by sending first indication information in an SI periodicity.

Implementation 1: For the plurality of SI periodicities included in the pos SIB periodicity, a quantity of pieces of first indication information sent in the second periodicity is the same as the quantity of the plurality of pos SIBs. In the first indication information sent in the second periodicity, one or more pieces of first indication information indicate that content of one segment of a corresponding pos SIB is null (or in other words, one or more pieces of first indication information are set to null). In addition, a quantity of pieces of first indication information sent in the first periodicity is the same as the quantity of the plurality of pos SIBs.

For example, it is assumed that the network device obtains three pos SIBs, and types of the three pos SIBs are respectively 2-12, 2-13, and 2-14 (where the three pos SIBs are respectively referred to as 2-12, 2-13, and 2-14 for short below), where a segment quantity of 2-12 is 3, a segment quantity of 2-12 is 2, and a segment quantity of 2-13 is 4. In this case, the largest segment quantity is 4. Therefore, the pos SIB periodicity includes four SI periodicities. The SI periodicity included in the pos SIB periodicity is a periodicity of system information 1 (SI 1). In other words, the network device transmits, to the terminal device, SI 1 including obtained segments of the pos SIBs.

An implementation in which the network device cyclically broadcasts 2-12, 2-13, and 2-14 in the pos SIB periodicity may be shown in Table 2.

**Table 2**

| | SI 1 | | |
|---|---|---|---|
| 1^{st} SI periodicity | 2-12 (segment 1) | 2-13 (segment 1) | 2-14 (segment 1) |
| 2^{nd} SI periodicity | 2-12 (segment 2) | 2-13 (segment 2) | 2-14 (segment 2) |
| 3^{rd} SI periodicity | 2-12 (segment 3) | 2-13 (element length=0) | 2-14 (segment 3) |
| 4^{th} SI periodicity | 2-12 (element length=0) | 2-13 (element length=0) | 2-14 (segment 4) |
| 5^{th} SI periodicity | 2-12 (segment 1) | 2-13 (segment 1) | 2-14 (segment 1) |
| 6^{th} SI periodicity | 2-12 (segment 2) | 2-13 (segment 2) | 2-14 (segment 2) |
| 7^{th} SI periodicity | 2-12 (segment 3) | 2-13 (element length=0) | 2-14 (segment 3) |
| 8^{th} SI periodicity | 2-12 (element length=0) | 2-13 (element length=0) | 2-14 (segment 4) |
| 9^{th} SI periodicity | 2-12 (segment 1) | 2-13 (segment 1) | 2-14 (segment 1) |
| 10^{th} SI periodicity | 2-12 (segment 2) | 2-13 (segment 2) | 2-14 (segment 2) |
| 11^{th} SI periodicity | 2-12 (segment 3) | 2-13 (element length=0) | 2-14 (segment 3) |
| 12^{th} SI periodicity | 2-12 (element length=0) | 2-13 (element length=0) | 2-14 (segment 4) |
| 13^{th} SI periodicity | 2-12 (segment 1) | 2-13 (segment 1) | 2-14 (segment 1) |
| 14^{th} SI periodicity | 2-12 (segment 2) | 2-13 (segment 2) | 2-14 (segment 2) |
| 15^{th} SI periodicity | 2-12 (segment 3) | 2-13 (element length=0) | 2-14 (segment 3) |
| 16^{th} SI periodicity | 2-12 (element length=0) | 2-13 (element length=0) | 2-14 (segment 4) |

In Table 2, every four SI periodicities form one pos SIB periodicity. The 1^{st} SI periodicity to the 4^{th} SI periodicity are used as an example. In the 1^{st} SI periodicity, the segment 1 of 2-12, the segment 1 of 2-13, and the segment 1 of 2-14 are sent, and content of the three segments is separately indicated by corresponding first indication information. In the 2^{nd} SI periodicity, the segment 2 of 2-12, the segment 2 of 2-13, and the segment 2 of 2-14 are sent, and content of the three segments is separately indicated by corresponding first indication information. In the 3^{rd} SI periodicity, the segment 3 of 2-12 and the segment 3 of 2-14 are sent, and content of the two segments is separately indicated by corresponding first indication information. In the 3^{rd} SI periodicity, first indication information corresponding to 2-13 is set to null. For example, if the first indication information is an assistance DataSIB-Element-r16 field, element length=0. In the 4^{th} SI periodicity, the segment 4 of 2-14 is sent, and content of the segment is indicated by corresponding first indication information. In the 4^{th} SI periodicity, first indication information corresponding to 2-12 and first indication information corresponding to 2-13 are set to null. For example, if the first indication information is an assistance DataSIB-Element-r16 field, element length=0.

A quantity of pieces of first indication information sent in each of the 1^{st} SI periodicity to the 4^{th} SI periodicity is the same as the quantity of pos SIBs. However, in the first indication information sent in each of the 3^{rd} SI periodicity and the 4^{th} SI periodicity, one or more pieces first indication information indicate that content of one segment of a corresponding pos SIB is null.

For a manner in which the segments of 2-12, 2-13, and 2-14 are sent in the 5^{th} SI periodicity to the 16^{th} SI periodicity, refer to the 1^{st} SI periodicity to the 4^{th} SI periodicity. Details are not described herein again.

Implementation 2: For the plurality of SI periodicities included in the pos SIB periodicity, a quantity of pieces of first indication information sent in the second periodicity is the same as the total quantity of the segments of the pos SIBs sent in the second periodicity. In addition, a quantity of pieces of first indication information sent in the first periodicity is the same as the quantity of the plurality of pos SIBs.

For example, it is assumed that the network device obtains three pos SIBs, and types of the three pos SIBs are respectively 2-12, 2-13, and 2-14 (where the three pos SIBs are respectively referred to as 2-12, 2-13, and 2-14 for short below), where a segment quantity of 2-12 is 3, a segment quantity of 2-12 is 2, and a segment quantity of 2-13 is 4. In this case, the largest segment quantity is 4. Therefore, the pos SIB periodicity includes four SI periodicities. The SI periodicity included in the pos SIB periodicity is a periodicity of system information 1 (SI 1). In other words, the network device transmits, to the terminal device, SI 1 including obtained segments of the pos SIBs.

An implementation in which the network device cyclically broadcasts 2-12, 2-13, and 2-14 in the pos SIB periodicity may be shown in Table 3.

**Table 3**

| | SI 1 | | |
|---|---|---|---|
| 1^{st} SI periodicity | 2-12 (segment 1) | 2-13 (segment 1) | 2-14 (segment 1) |
| 2^{nd} SI periodicity | 2-12 (segment 2) | 2-13 (segment 2) | 2-14 (segment 2) |
| 3^{rd} SI periodicity | 2-12 (segment 3) | / | 2-14 (segment 3) |
| 4^{th} SI periodicity | / | / | 2-14 (segment 4) |
| 5^{th} SI periodicity | 2-12 (segment 1) | 2-13 (segment 1) | 2-14 (segment 1) |
| 6^{th} SI periodicity | 2-12 (segment 2) | 2-13 (segment 2) | 2-14 (segment 2) |
| 7^{th} SI periodicity | 2-12 (segment 3) | / | 2-14 (segment 3) |
| 8^{th} SI periodicity | / | / | 2-14 (segment 4) |
| 9^{th} SI periodicity | 2-12 (segment 1) | 2-13 (segment 1) | 2-14 (segment 1) |
| 10^{th} SI periodicity | 2-12 (segment 2) | 2-13 (segment 2) | 2-14 (segment 2) |
| 11^{th} SI periodicity | 2-12 (segment 3) | / | 2-14 (segment 3) |
| 12^{th} SI periodicity | / | / | 2-14 (segment 4) |
| 13^{th} SI periodicity | 2-12 (segment 1) | 2-13 (segment 1) | 2-14 (segment 1) |
| 14^{th} SI periodicity | 2-12 (segment 2) | 2-13 (segment 2) | 2-14 (segment 2) |
| 15^{th} SI periodicity | 2-12 (segment 3) | / | 2-14 (segment 3) |
| 16^{th} SI periodicity | / | / | 2-14 (segment 4) |

In Table 3, every four SI periodicities form one pos SIB periodicity. The 1^{st} SI periodicity to the 4^{th} SI periodicity are used as an example. In the 1^{st} SI periodicity, the segment 1 of 2-12, the segment 1 of 2-13, and the segment 1 of 2-14 are sent, and content of the three segments is separately indicated by corresponding first indication information. In the 2^{nd} SI periodicity, the segment 2 of 2-12, the segment 2 of 2-13, and the segment 2 of 2-14 are sent, and content of the three segments is separately indicated by corresponding first indication information. In the 3^{rd} SI periodicity, the segment 3 of 2-12 and the segment 3 of 2-14 are sent, and content of the two segments is separately indicated by corresponding first indication information. In addition, in the 3^{rd} SI periodicity, first indication information corresponding to 2-13 is not sent. In the 4^{th} SI periodicity, the segment 4 of 2-14 is sent, and content of the segment is indicated by corresponding first indication information. In addition, in the 4^{th} SI periodicity, first indication information corresponding to 2-12 and first indication information corresponding to 2-13 are not sent.

A quantity of pieces of first indication information sent in the 1^{st} SI periodicity and a quantity of pieces of first indication information sent in the 2^{nd} SI periodicity both are the same as the quantity of the pos SIBs. A quantity of pieces of first indication information sent in the 3^{rd} SI periodicity and a quantity of pieces of first indication information sent in the 4^{th} SI periodicity are respectively 2 and 1, which are less than the quantity of pos SIBs.

For a manner in which the segments of 2-12, 2-13, and 2-14 are sent in the 5^{th} SI periodicity to the 16^{th} SI periodicity, refer to the 1^{st} SI periodicity to the 4^{th} SI periodicity. Details are not described herein again.

Correspondingly, when receiving the pos SIBs, the terminal device may periodically receive the pos SIBs based on the pos SIB periodicity. For specific implementation, refer to the descriptions of sending the pos SIBs based on the pos SIB periodicity in the foregoing embodiment, and correspondingly, sending is replaced with receiving.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

It may be understood that, in the foregoing embodiments, the methods and/or the steps implemented by the units may alternatively be implemented by a component (for example, a processor, a chip, a chip system, a circuit, a logic module, or software, for example, a chip or a circuit) that can be used in the units.

The foregoing mainly describes the solutions provided in this application from a perspective of interaction between units. Correspondingly, this application further provides a communication apparatus, and the communication apparatus is configured to implement the foregoing methods. The communication apparatus may be the network device or the terminal device in the foregoing method embodiments, an apparatus including the foregoing device, or a component that may be used in the foregoing device.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used.

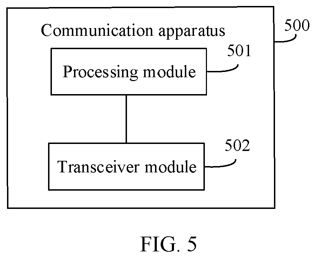

FIG. 5 is a diagram of a structure of a communication apparatus 500. For example, as shown in FIG. 5, the communication apparatus 500 includes a transceiver module 502 and a processing module 501. For ease of description, FIG. 5 shows only main components of the communication apparatus.

In some embodiments, the communication apparatus 500 may further include a storage module (not shown in FIG. 5), configured to store program instructions and data.

In some embodiments, the transceiver module 502 may also be referred to as a transceiver unit, configured to implement a sending function and/or a receiving function. The transceiver module 502 may include a transceiver circuit, a transceiver machine, a transceiver, or a communication interface.

In some embodiments, the transceiver module 502 may include a receiving module and a sending module, respectively configured to perform receiving and sending steps performed by the network device or the terminal device in the foregoing method embodiments, and/or configured to support other processes of the technologies described in this specification. The processing module 501 may be configured to perform processing (for example, determining or generation) steps performed by the network device or the terminal device in the foregoing method embodiments, and/or configured to support other processes of the technologies described in this specification.

When the communication apparatus 500 is configured to implement functions of the foregoing network device:

In a possible design, the processing module 501 is configured to obtain a plurality of positioning system information blocks, where each positioning system information block includes a plurality of segments. The transceiver module 502 is configured to periodically broadcast the plurality of positioning system information blocks by using system information, where a periodicity of the plurality of positioning system information blocks includes a plurality of periodicities of the system information, and one segment of each of one or more positioning system information blocks in the plurality of positioning system information blocks is sent in one periodicity of the system information.

When the communication apparatus 500 is configured to implement functions of the foregoing terminal device:

The transceiver module 502 is configured to periodically receive a plurality of positioning system information blocks by using system information, where a periodicity of the plurality of positioning system information blocks includes a plurality of periodicities of the system information, and one segment of each of one or more positioning system information blocks in the plurality of positioning system information blocks is received in one periodicity of the system information.

All related content of the steps in the foregoing method embodiments may be cited in function descriptions of the corresponding functional modules. Details are not described herein again.

In this application, the communication apparatus 500 is presented in a form of functional modules obtained through division in an integrated manner. The "module" herein may be an application-specific integrated circuit (application-specific integrated circuit, ASIC), a circuit, a processor that executes one or more software programs or firmware programs, a memory, an integrated logic circuit, and/or another component that can provide the foregoing functions.

In some embodiments, when the communication apparatus 500 in FIG. 5 is a chip or a chip system, a function/implementation process of the transceiver module 502 may be implemented by an input/output interface (or a communication interface) of the chip or the chip system, and a function/implementation process of the processing module 501 may be implemented by a processor (or a processing circuit) of the chip or the chip system.

The communication apparatus 500 provided in this embodiment may perform the foregoing methods. Therefore, for technical effects that can be achieved by the communication apparatus 500, refer to the foregoing method embodiments. Details are not described herein again.

In a possible product form, the communication apparatus 500 may be implemented by using one or more field programmable gate arrays (field programmable gate arrays, FPGAs), a programmable logic device (programmable logic device, PLD), a controller, a state machine, gate logic, a discrete hardware component, any other suitable circuit, or any combination of circuits that can perform various functions described throughout this application.

It should be noted that the structure shown in FIG. 5 does not constitute a specific limitation on a device structure. For example, in some other embodiments of this application, the devices may include more or fewer components than those shown in the figure, or may combine some components, or may split some components, or may have different component arrangements. The components shown in the figure may be implemented by hardware, software, or a combination of software and hardware.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any one of the foregoing method embodiments. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and send the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

In a simple embodiment, a person skilled in the art may figure out that the communication apparatus 500 may be in the form of the communication apparatus 300 shown in FIG. 3.

Specifically, functions/implementation processes of the transceiver module 502 and the processing module 501 in FIG. 5 may be implemented by the processor 301 in FIG. 3 by invoking the computer-executable instructions stored in the memory 303. Alternatively, functions/implementation processes of the processing module 501 in FIG. 5 may be implemented by the processor 301 in FIG. 3 by invoking the computer-executable instructions stored in the memory 303. Functions/implementation processes of the transceiver module 502 in FIG. 5 may be implemented through the communication interface 304 in FIG. 3.

This application further provides a computer-readable storage medium. The computer-readable storage medium stores a computer program or instructions. When the computer program or instructions are executed by a computer, functions in any one of the foregoing method embodiments are implemented.

This application further provides a computer program product. When the computer program product is executed by a computer, functions in any one of the foregoing method embodiments are implemented.

A person of ordinary skill in the art may understand that, for the purpose of convenient and brief description, for a detailed working process of the foregoing system, apparatus, and unit, refer to a corresponding process in the foregoing method embodiments. Details are not described herein again.

It may be understood that the system, apparatus, and method described in this application may alternatively be implemented in another manner. For example, the foregoing apparatus embodiments are merely examples. For example, division into the units is merely logical function division. During actual implementation, another division manner may be used. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may be physically separated or not, that is, may be located together in the same place or distributed on a plurality of network units. Parts displayed as units may be or may be not physical units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When a software program is used to implement embodiments, all or some of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state disk, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the accompanying claims, and are considered as any of or all modifications, variations, combinations or equivalents that cover the scope of this application. It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A communication method, wherein the method comprises:
obtaining a plurality of positioning system information blocks, wherein each positioning system information block comprises a plurality of segments; and
periodically broadcasting the plurality of positioning system information blocks by using system information, wherein a periodicity of the plurality of positioning system information blocks comprises a plurality of periodicities of the system information, and one segment of each of one or more positioning system information blocks in the plurality of positioning system information blocks is sent in one periodicity of the system information.

2. The method according to claim 1, wherein a quantity of the plurality of periodicities of the system information is the same as a largest segment quantity in quantities of segments comprised in the positioning system information blocks.

3. The method according to claim 1 or 2, wherein the plurality of periodicities of the system information comprise one or more first periodicities and one or more second periodicities, a total quantity of segments of positioning system information blocks sent in the first periodicity is the same as a quantity of the plurality of positioning system information blocks, and a total quantity of segments of positioning system information blocks sent in the second periodicity is less than the quantity of the plurality of positioning system information blocks.

4. The method according to claim 3, wherein a quantity of pieces of first indication information sent in the second periodicity is the same as the quantity of the plurality of positioning system information blocks, the first indication information indicates content of one segment of a corresponding positioning system information block, and in the first indication information sent in the second periodicity, one or more pieces of first indication information indicate that content of one segment of a corresponding positioning system information block is null.

5. The method according to claim 3, wherein a quantity of pieces of first indication information sent in the second periodicity is the same as the total quantity of the segments of the positioning system information blocks sent in the second periodicity, and the first indication information indicates content of one segment of a corresponding positioning system information block.

6. The method according to any one of claims 1 to 5, wherein the plurality of positioning system information blocks have different segment quantities.

7. A communication method, wherein the method comprises:
periodically receiving a plurality of positioning system information blocks by using system information, wherein a periodicity of the plurality of positioning system information blocks comprises a plurality of periodicities of the system information, and one segment of each of one or more positioning system information blocks in the plurality of positioning system information blocks is received in one periodicity of the system information.

8. The method according to claim 7, wherein a quantity of the plurality of periodicities of the system information is the same as a largest segment quantity in quantities of segments comprised in the positioning system information blocks.

9. The method according to claim 7 or 8, wherein the plurality of periodicities of the system information comprise one or more first periodicities and one or more second periodicities, a total quantity of segments of positioning system information blocks received in the first periodicity is the same as a quantity of the plurality of positioning system information blocks, and a total quantity of segments of positioning system information blocks received in the second periodicity is less than the quantity of the plurality of positioning system information blocks.

10. The method according to claim 9, wherein a quantity of pieces of first indication information received in the second periodicity is the same as the quantity of the plurality of positioning system information blocks, the first indication information indicates content of one segment of a corresponding positioning system information block, and in the first indication information received in the second periodicity, one or more pieces of first indication information indicate that content of one segment of a corresponding positioning system information block is null.

11. The method according to claim 9, wherein a quantity of pieces of first indication information received in the second periodicity is the same as the total quantity of the segments of the positioning system information blocks received in the second periodicity, and the first indication information indicates content of one segment of a corresponding positioning system information block.

12. The method according to any one of claims 7 to 11, wherein the plurality of positioning system information blocks have different segment quantities.

13. A communication apparatus, wherein the apparatus comprises a processing module and a transceiver module, wherein
the processing module is configured to obtain a plurality of positioning system information blocks, wherein each positioning system information block comprises a plurality of segments; and
the transceiver module is configured to periodically broadcast the plurality of positioning system information blocks by using system information, wherein a periodicity of the plurality of positioning system information blocks comprises a plurality of periodicities of the system information, and one segment of each of one or more positioning system information blocks in the plurality of positioning system information blocks is sent in one periodicity of the system information.

14. The apparatus according to claim 13, wherein a quantity of the plurality of periodicities of the system information is the same as a largest segment quantity in quantities of segments comprised in the positioning system information blocks.

15. The apparatus according to claim 13 or 14, wherein the plurality of periodicities of the system information comprise one or more first periodicities and one or more second periodicities, a total quantity of segments of positioning system information blocks sent in the first periodicity is the same as a quantity of the plurality of positioning system information blocks, and a total quantity of segments of positioning system information blocks sent in the second periodicity is less than the quantity of the plurality of positioning system information blocks.

16. The apparatus according to claim 15, wherein a quantity of pieces of first indication information sent in the second periodicity is the same as the quantity of the plurality of positioning system information blocks, the first indication information indicates content of one segment of a corresponding positioning system information block, and in the first indication information sent in the second periodicity, one or more pieces of first indication information indicate that content of one segment of a corresponding positioning system information block is null.

17. The apparatus according to claim 15, wherein a quantity of pieces of first indication information sent in the second periodicity is the same as the total quantity of the segments of the positioning system information blocks sent in the second periodicity, and the first indication information indicates content of one segment of a corresponding positioning system information block.

18. The apparatus according to any one of claims 13 to 17, wherein the plurality of positioning system information blocks have different segment quantities.

19. A communication apparatus, wherein the apparatus comprises a transceiver module, wherein
the transceiver module is configured to periodically receive a plurality of positioning system information blocks by using system information, wherein a periodicity of the plurality of positioning system information blocks comprises a plurality of periodicities of the system information, and one segment of each of one or more positioning system information blocks in the plurality of positioning system information blocks is received in one periodicity of the system information.

20. The apparatus according to claim 19, wherein a quantity of the plurality of periodicities of the system information is the same as a largest segment quantity in quantities of segments comprised in the positioning system information blocks.

21. The apparatus according to claim 19 or 20, wherein the plurality of periodicities of the system information comprise one or more first periodicities and one or more second periodicities, a total quantity of segments of positioning system information blocks received in the first periodicity is the same as a quantity of the plurality of positioning system information blocks, and a total quantity of segments of positioning system information blocks received in the second periodicity is less than the quantity of the plurality of positioning system information blocks.

22. The apparatus according to claim 21, wherein a quantity of pieces of first indication information received in the second periodicity is the same as the quantity of the plurality of positioning system information blocks, the first indication information indicates content of one segment of a corresponding positioning system information block, and in the first indication information received in the second periodicity, one or more pieces of first indication information indicate that content of one segment of a corresponding positioning system information block is null.

23. The apparatus according to claim 22, wherein a quantity of pieces of first indication information received in the second periodicity is the same as the total quantity of the segments of the positioning system information blocks received in the second periodicity, and the first indication information indicates content of one segment of a corresponding positioning system information block.

24. The apparatus according to any one of claims 19 to 23, wherein the plurality of positioning system information blocks have different segment quantities.

25. A communication apparatus, wherein the communication apparatus comprises a processor and a memory, the memory is configured to store computer instructions, and when the processor executes the instructions, the communication apparatus is enabled to perform the method according to any one of claims 1 to 12.

26. A computer-readable storage medium, wherein the computer-readable storage medium comprises a computer program or instructions, and when the computer program or the instructions are run on a computer, the method according to any one of claims 1 to 12 is performed.

27. A computer program product, wherein the computer program product comprises instructions, and when the instructions are run on a computer, the method according to any one of claims 1 to 12 is performed.

28. A chip, wherein the chip comprises a processor, and the processor is configured to run instructions, to enable an apparatus comprising the chip to perform the method according to any one of claims 1 to 12.

29. A communication system, wherein the communication system comprises a network device and a terminal device, the network device is configured to perform the method according to any one of claims 1 to 6, and the terminal device is configured to perform the method according to any one of claims 7 to 12.
